(19) **Europäisches Patentamt / European Patent Office / Office européen des brevets**

(11) **EP 4 045 243 B1**

(12) **EUROPEAN PATENT SPECIFICATION**

(45) Date of publication and mention
of the grant of the patent:
**22.11.2023 Bulletin 2023/47**

(21) Application number: **20804673.0**

(22) Date of filing: **15.10.2020**

(51) International Patent Classification (IPC):
*B25J 15/00* (2006.01)  *B25J 15/10* (2006.01)
*B25J 19/02* (2006.01)  *B23D 35/00* (2006.01)
*G01B 11/02* (2006.01)  *G01B 21/04* (2006.01)

(52) Cooperative Patent Classification (CPC):
**B25J 15/0047; B25J 15/10; B25J 19/022;**
**G01B 11/026; G01B 21/047;** B23D 35/008

(86) International application number:
**PCT/IB2020/059682**

(87) International publication number:
**WO 2021/074834 (22.04.2021 Gazette 2021/16)**

(54) **DETECTION SYSTEM FOR A GRIPPING GROUP FOR TOOLS AND METHOD THEREOF**

*DETEKTIONSSYSTEM FÜR EINE GREIFGRUPPE FÜR WERKZEUGE UND VERFAHREN DAFÜR*

*SYSTÈME DE DÉTECTION POUR UN GROUPE DE PRÉHENSION POUR OUTILS ET PROCÉDÉ ASSOCIÉ*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.10.2019 IT 201900018785**

(43) Date of publication of application:
**24.08.2022 Bulletin 2022/34**

(73) Proprietor: **Faspar S.p.A.**
**20087 Robecco sul Naviglio (MI) (IT)**

(72) Inventors:
• **AIME, Paolo Ottavio**
  **20087 Robecco sul Naviglio (MI) (IT)**
• **AIME, Maddalena Lucia**
  **20087 Robecco sul Naviglio (MI) (IT)**

(74) Representative: **IP Sextant s.r.l.**
**Via A. Salandra, n.18**
**00187 Rome (IT)**

(56) References cited:
**EP-A1- 2 193 890**    **CN-A- 101 788 272**
**DE-A1-102014 014 918**    **JP-A- 2009 184 081**

## Description

The present invention relates to a detection system configured to control the positioning of a gripping group with respect to at least one tool to be picked up from a magazine, along a projecting shaft cantilevered from a wall of the magazine itself. The present invention also relates to a method for positioning the gripping group implemented by means of such detection system.

In the following description and claims explicit reference will be made to tools such as circular cutting blades, separators, etc. that can be used for the processing of sheets of metallic material wound on reels in the "slitter" lines. The person skilled in the art will have no difficulty in understanding how the present invention can be easily implemented also in other fields of the art, in particular in all those sectors wherein it is necessary to position a gripping group relative to hollow circular tools supported in a cantilevered way along support shaft, to be able to pick them up.

It is known that in the metal sheet processing sector the tools used, when not in use, are stored in a magazine hanging from one or more tool-holder shafts projecting from a wall or from an upright supported rotating on a base. These tools are often abutted against other tools hanging on the same tool holder shaft of the magazine or in any case at a close distance from each other.

When the tools are to be used, they are picked up one by one by means of a robot having a gripping end traditionally comprising an electromagnet, delimiting a central hole, and a mechanical gripping device, which can be moved linearly within the central hole delimited by the electromagnet, as for example described in the document EP 2193890.

The electromagnet of the robot gripping end is configured to be controlled in current so as to be able to selectively attract and hold a tool made of ferromagnetic material, arranged at the free end of the tool holder shaft of the magazine, along a its face turned towards the gripping end, and allowing the demagnetization of the tool itself, which could also be carried out once the gripping device, translating linearly inside the central hole of the electromagnet, has taken charge of it. Once the tool has been loaded, it will be moved by the robot on a temporary parking arm. The robot, then, if necessary, will move inside the warehouse in correspondence with a new tool to be picked up and will proceed in the manner described above.

The gripping groups of the known type may include sensors to detect the position of the tool to be picked up and command the movement of the gripping group itself towards the tool. The sensors are operationally connected to a control unit of the gripping group in order to be able to control the drive in approaching the tool to be picked up and avoiding unwanted collisions between the gripping group and the tool.

Any impact of the gripping group against the tools can damage the latter, with the need to replace them to prevent damaged tools from being used, compromising the entire production.

Furthermore, an incorrect positioning of the gripping group with respect to the tool to be picked up can cause damage to the gripping device, such as an expanding mandrel, which during the expansion phase inside the opening delimited by the tool can strike against the tool itself, damaging it.

The use of a sensor such as a laser sensor operatively connected to a gripping group in order to detect externally and radially a tool to be picked up, is known in the field.

Document JP 2009184081 A discloses a detection system having such a laser sensor connected at the front of a gripping group to detect externally and radially an object to be picked up.

In this regard, the laser sensor is operatively connected to the head portion of a gripping group, by means of an electro-actuated carriage, and can be operated in linear, forward and backward movement, in order to be selectively arranged at the tool to be pick up before proceeding with the handling of the latter by the gripping group itself.

As noted, the laser sensor is mounted at a suitable radial distance with respect to the central axis of the spindle of the gripping device, so as to prevent the laser sensor itself from hitting the external surface of the tools deposited along the same support shaft, damaging or damaging the tool.

In particular, the laser sensor is mounted at a radial distance greater than the maximum radial dimensions of the tools to be picked up. This positioning limits the accuracy of reading by the sensor with particular reference to tools which have reduced radial dimensions compared to those of greater amplitude with respect to which, therefore, resolution in the grip is lost.

There is a need in the field to overcome the aforementioned drawbacks and the main purpose of the present invention is to provide a detection system configured to control the positioning of a gripping group for tools and a corresponding method of positioning a gripping group for tools that allow in an effective, precise, easy to implement and economical way to move a gripping group for tools with respect to tools deposited along a support arm of a warehouse, whose position along said support arm is not known a priori.

The specific object of the present invention is a detection system configured to be operably connectable to a front portion of a gripping group for gripping at least one tool supported cantilevered along a support shaft, wherein the detection system comprises a detection comprising, in turn, at least one photoelectric sensor configured to emit an optical signal along a radial direction orthogonal to a central axis of movement of the gripping group, to detect the presence of the at least one tool, wherein said optical signal is oriented with the direction starting from the central axis away from it, wherein the detection system can comprise at least one plate-like support to which the at least one photoelectric sensor is operatively connected so as to define an optical plane along which the emitted optical signal lies from at least one photoelectric sensor.

According to another aspect of the invention, the detection system can comprise a control and processing unit operatively connected to the at least one photoelectric sensor, wherein the control and processing unit is configured to control and command the actuation of movement members of the gripping group along the central axis between an initial rest position and a working position in correspondence with the at least one tool.

According to a further aspect of the present invention, the detection unit can comprise a closure lid operably connectable to the plate-like support, in a spaced position, delimiting a gap open laterally inside which the at least one photoelectric sensor is positioned.

According to an additional aspect of the present invention, the optical plane is spaced from a gripping plane of a mechanical gripping device of the gripping group along the central axis, by means of an off-set distance.

According to another aspect of the present invention, the detection unit comprises at least three photoelectric sensors arranged equidistant from each other according to a circumferential symmetry around the central axis.

Furthermore, a method for positioning a gripping group for gripping at least one tool supported in a warehouse along a cantilevered support shaft is a specific object of the present invention, wherein the method is implemented by means of a detection system of the type indicated above and wherein the method includes the steps of:

- position the gripping group in a frontal position with respect to the at least one tool to be picked up, centred with respect to the at least one tool, with the detection unit of the detection system facing towards the at least one tool and centred on it;
- move the detection unit along the central axis together with the gripping group, approaching at least one tool;
- activate at least one photoelectric sensor of the detection unit to detect the positioning of a front plane of at least one tool along the central axis;
- place a gripping device of the gripping group at a gripping surface of at least one tool, to allow gripping of at least one tool.

According to another aspect of the present invention, the positioning method for positioning a gripping group can be realized by means of a detection system described above and also comprise the following step:

- transmit a signal for detecting the frontal plane of at least one tool from the at least one photoelectric sensor to a control and processing unit operatively connected to moving parts of the gripping group.

According to a further aspect of the present invention, the step of detecting the positioning of said at least one tool along the central axis may comprise emitting at least one optical signal from the at least one photoelectric sensor along a radial direction with respect to the central axis with a starting direction from the central axis away from it.

According to an additional aspect of the present invention, the step of positioning the gripping device at a gripping plane of the at least one tool to be picked up can comprise advancing the gripping device by a distance along the central axis equal to the sum of a thickness of the at least one tool and an offset distance between the optical plane and a gripping plane of the gripping device.

According to another aspect of the present invention, the positioning method for positioning a gripping group can comprise acquiring the gripping distance of the at least one tool to determine the position of a front plane of a further tool to be picked up subsequent to the tool previously taken along the same support shaft.

The present invention will now be described, by way of illustration and not by way of limitation, according to its preferred embodiments, by particularly referring to the Figures of the annexed drawings, wherein:

Figure 1 shows a front perspective view of a detection system according to the invention operatively connected to a gripping group during a gripping phase of a tool;
Figure 2 shows a schematic perspective view of some components of a detection system operatively connected to the front portion of a gripping group;
Figures 3 to 5 schematically show some movement phases of a gripping group including a detection system according to the invention.

In the accompanying Figures, identical reference numbers will be used for similar elements.

With particular reference to the attached Figures, it will be noted that a detection system configured to be used to control the movement of a gripping group 2 for tools is generally indicated with the reference number 1.

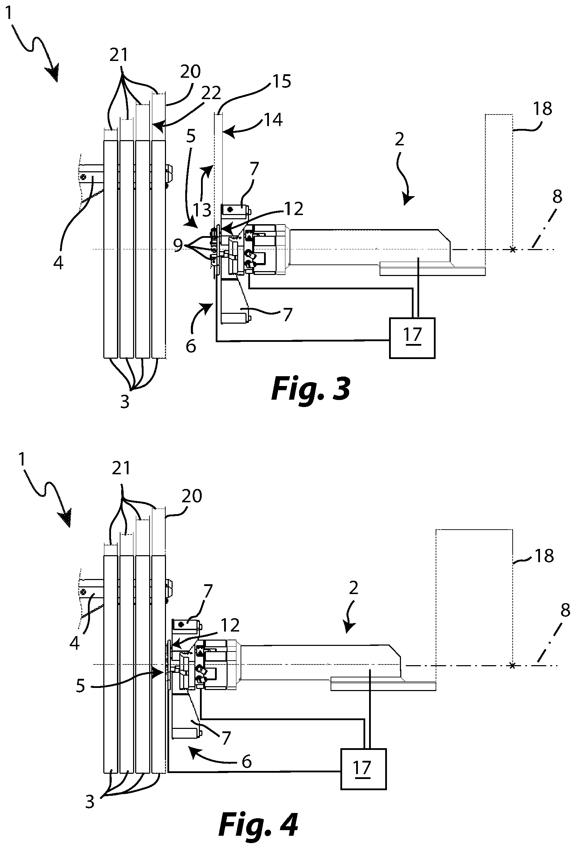

As mentioned, the detection system 1 is configured to be operationally connected to a gripping group 2, in order to detect the position of at least one tool 3 supported in a hanging configuration from a support shaft 4 of a warehouse, to be picked up by the gripping group 2 itself (see Figures 3 to 5).

The at least one tool 3 is of the type used in slitter cutting lines although it is intended that, as mentioned, the present invention can still find use in other sectors wherein it is necessary to detect the position of a tool or an article having a cavity, which is supported in a hanging configuration along a cantilever shaft of a warehouse.

The gripping group 2 is configured to take circular tools comprising at least one ferromagnetic portion and, in this regard, it comprises at least one electromagnet delimiting a central cavity relative to which a gripping device, such as a self-centering mandrel, can be moved.

It is understood that the present invention can in any case be implemented in a gripping group 2 wherein the gripping of a tool is carried out exclusively by means of a mechanical gripping device, without therefore foreseeing the presence of an electromagnet.

In general, similar gripping groups 2, comprising both an electromagnet and a mechanical gripping device or only a mechanical gripping device, are known in the field and, as such, do not form a specific object of the present invention except in relation to their use in combination with the detection system 1.

In the following description and in the attached Figures, the description and representation of the gripping group 2 will be limited to those components useful for understanding the present invention, omitting the presence of an electromagnet in the gripping group 2 provided for gripping at least one tool 3, even if it is understood that it is included in gripping group 2.

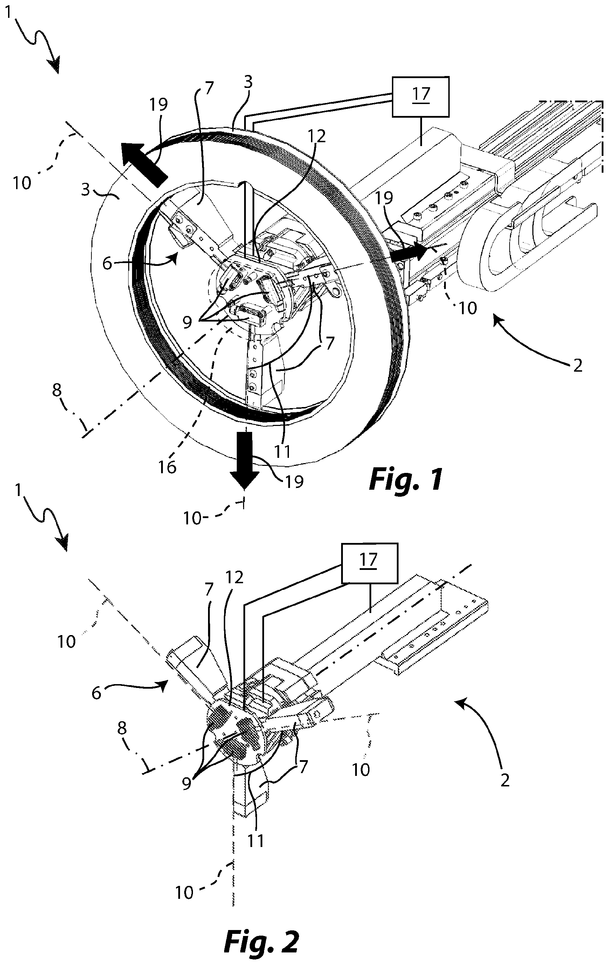

The detection system 1 comprises a detection unit configured to be connected to a front portion 5 of a gripping group 2 (see Figures 1 and 3-5). The term front portion 5 is intended to indicate the head portion of a gripping group 2 which in use faces the at least one tool 3 to be moved and, in practice, corresponds to one end of the gripping group 2 at which a mechanical gripping device, indicated as a whole with 6 is movably positioned.

Preferably, the mechanical gripping device 6 is configured as a self-centering spindle comprising three radial grippers 7, mutually arranged according to a central symmetry with respect to a central axis 8 of the gripping group 2. The individual gripper 7 can be moved radially with respect to the central axis 8 between a gripping position, in which they are extracted radially outwards, to engage the at least one tool 3 to be removed, and a release position, wherein they are retracted radially towards the central axis 8, to release the at least one tool 3 previously held or to be able to be moved relative to at least one tool 3 to be picked up.

It is understood that a gripping group 2 may comprise a mechanical gripping device 6 carrying a different number of grippers 7 (for example four or five or six or in general depending on the geometry of the tool to be handled) without thereby exiting from the inventive concept of the invention.

The detection unit includes at least one photoelectric sensor 9 configured to emit an optical signal along a corresponding radial direction 10 with respect to the central axis 8 (in other words, the radial direction 10 is orthogonal to the central axis 8).

Preferably, the at least one photoelectric sensor 9 is configured to emit laser radiation within the visible spectrum.

According to an alternative embodiment, the at least one photoelectric sensor 9 is configured to emit an infrared optical signal.

It is understood that in the event that the detection unit comprises several photoelectric sensors 9, these can all be of the same type, for example capable of emitting an optical laser or infrared signal, or mixed, for example the detection unit can comprise at least one photoelectric sensor 9 capable of emitting a laser optical signal and at least one photoelectric sensor 9 capable of emitting an infrared optical signal, while falling within the same inventive concept as the present detection system 1.

It is understood that the at least one photoelectric sensor 9 is configured to emit and receive an optical signal and the related data to a logic unit to which it can be connected, as better described below.

In the attached Figures, with particular reference to Figures 1 and 2, a preferred embodiment of the detection system according to the invention is illustrated wherein the detection unit comprises three photoelectric sensors 9. In particular, the photoelectric sensors 9 are positioned angularly equidistant from each other according to a circular symmetry with respect to the central axis 8. Therefore, the respective radial directions 10 are angularly spaced from each other by a circumferential angle 11 equal to about 120°. It is understood that, in other embodiments of the detection system according to the invention, the detection unit may include a different number of photoelectric sensors 9 than those described above, for example four or five, etc. according to specific needs of use. It is understood that the circumferential angle 11 varies as a function of the total number of photoelectric sensors 9 comprised in the detection system 1. Furthermore, other embodiments of the detection system according to the invention may have that the photoelectric sensors of the detection unit they are not positioned angularly equidistant from each other.

The detection unit comprises at least one plate-like support 12 to which the at least one photoelectric sensor 9 is operationally connected, by way of example by screws, in such a way as to direct its optical signal along a respective radial direction 10.

In turn, the plate-like support 12 is configured to be operatively connected to the front portion 5 of the gripping group 2, for example by means of removable connection members, such as screws or an interlocking connection, not illustrated in detail in the attached figures.

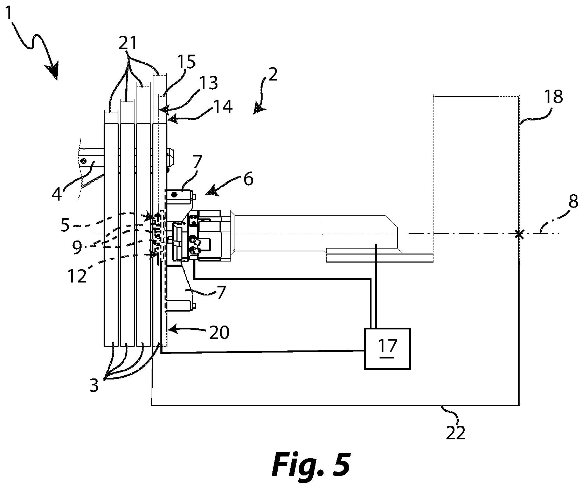

The plate-like support 12 also defines an optical plane 13 along which the individual optical signals emitted by the respective photoelectric sensors 9 lie. The optical plane 13 is orthogonal to the central axis 8 (see Figures 3 and 5).

It is evident that the optical plane 13 is spaced apart from a gripping plane 14, along which the individual gripper 7 of the mechanical gripping device 6 act, by an off-set distance 15 along the central axis 8.

In fact, the optical plane 13 anticipates the trajectory of the gripping plane 14 along the central axis 8 or, in other words, the at least one photoelectric sensor 9 anticipates the trajectory of the mechanical gripping device 6 along this axis.

The detection unit comprises a closure cover 16, operably connectable to the plate-like support 12, by means of a removable connection, to protect the at least one photoelectric sensor 9 (see Figure 1 in which the cover 16 is illustrated in transparency, by discontinuous lines).

In particular, the cover 16 is connected frontally to the plate-like support 12, spaced from this along the central axis 8, so as to delimit a gap inside which at least one photoelectric sensor 9 is positioned.

The gap is laterally open to allow at least one photoelectric sensor 9 to emit a respective optical signal towards the outside of the cover 16.

In fact, the cover 16 frontally protects the at least one photoelectric sensor 9 against any impact, preserving its functionality.

The mechanical gripping device 6 is configured to be moved along the central axis 8 between a rest position, wherein it is pulled back with respect to a tool 3 to be taken in charge (see Figure 3), and a working position, wherein it is located at a tool 3 to be taken over (see Figure 5).

In this regard, the gripping group 2 comprises movement members, not illustrated in the attached figures, configured to selectively move the mechanical gripping device 6 along the central axis 8 between the aforementioned rest and working positions, and vice versa.

The detection system 1 comprises at least one logic control and data processing unit, schematically indicated with 17, configured to control the operation of the gripping group 2.

In particular, the logic control and data processing unit 17, hereinafter processing unit 17 for the sake of brevity, is operatively connected to the detection unit, so as to receive and process the signals coming from the at least one photoelectric sensor 9, from the moving parts of the gripping group 2 and those for operating the grippers 7 of the mechanical gripping device 6.

It can be seen that in the attached Figures, the connections or wiring between the processing unit 17, the at least one photoelectric sensor 9, the moving members of the gripping group and actuation of the mechanical gripping device 6 have been schematized by means of simple lines given that this technical aspect is within the reach of the person skilled in the sector.

The processing unit 17 is therefore configured to selectively control the gripping group 2 on the basis of the data received from the detection unit, depending on the detected position of the gripping group 2 relative to at least one tool 3 to be picked up.

The detection system 1 described above can be easily used for the implementation of a positioning method of a gripping group 2 with respect to at least one tool 3 to be picked up along a support shaft 4 of a warehouse.

This method provides for providing the gripping group 2 in a frontal and centered position with respect to the at least one tool 3 to be picked up, at a distance not known a priori. With the expression centered position it is meant that the central axis 8 of the gripping group 2 is aligned with the central axis of the tools 3 arranged in a hanged configuration along a support shaft 4 of a warehouse.

Therefore, an approaching operating phase is provided (see Figure 3) which comprises advancing the front portion 5 of the gripping group 2 along the central axis 8, approaching at least one tool 3 to be picked up along the support shaft. 4.

The gripping group 2 is moved starting from an initial or rest position 18 (see Figures 3 to 5) identified along the central axis 8. In particular, the initial position 18 defines a reference for the detection system 1 in relation to which to manage and control the movement of the gripping group 2, as better described below.

Regardless of the presence of a possible magnetization unit, which can be moved and operated selectively to grasp the at least one tool 3 holding it by means of a suitable magnetic field, during the first operating phase of handling the gripping group 2, the optical plane 13 and the gripping plane 14 to the at least one tool 3.

In the approach phase towards the at least one tool 3, the detection unit is active and, therefore, the at least one photoelectric sensor 9 emits an optical signal along a respective radial direction 10, with a direct direction from the central axis 8 away from the latter, in order to detect the position of at least one tool 3 to be picked up (see Figure 1, wherein the direction of the optical signal emitted by the at least one photoelectric sensor 9 is highlighted by a respective arrow 19).

When the detection unit comes close to a tool 3, arranged at the end of the support shaft 4, that is, when the distance between the optical plane 13 and a front plane 20 of the at least one tool 3 is substantially equal to zero, the at least one photoelectric sensor 9 detects the presence of the at least one tool 3 to be picked up and emits a signal which is received and processed by the processing and control unit 17.

In particular, it is noted that the optical signal emitted by at least one photoelectric sensor 9 intercepts at least one internal surface of the at least one tool 3, which delimits the central opening of the same. The optical signal is reflected by this internal surface, to be then detected by the photoelectric sensor 9 itself.

After having received the signal from the at least one photoelectric sensor 9, the processing unit 17 controls the advancement of the mechanical gripping device 6 along the central axis 8 for a further operating distance (hereinafter also referred to as Dworking), until the mechanical gripping device 6 is carried to a gripping distance 22 along the central axis 8 with respect to the initial position 18 (see Figure 5) wherein the mechanical gripping device 6 is configured to engage, by the grippers 7, the at least a tool 3 identified. It is observed that the thickness 21 of the at least one tool 3 to be removed is known a priori. The detection system 1 can in any case be used to verify this datum and thus perform a further check.

The gripping distance 22 (indicated below also with D) is equal to the sum of the offset distance 15 (indicated below also with $d_{offset}$) between the optical plane 13 and the gripping plane 14, the thickness 21 (indicated in the followed also with $t_{tool}$) of the at least one tool 3 along the central axis 8 and the distance travelled by the mechanical gripping device 6 between the rest position 18 and the position in which the detection unit has detected the front plane 20 of the at least one tool 3 to be picked up (hereinafter also referred to as $d_{detection}$), i.e. the distance between the rest position 18 and the position wherein the distance between the optical plane 13 and the frontal plane 20 of the tool 3 is equal to zero:

$$D = d_{offset} + t_{tool} + d_{detection}$$

With the mechanical gripping device 6 arranged at the gripping distance 22, the processing unit 17 activates the grippers 7 of the mechanical gripping device 6, binding the at least one tool 3 to the mechanical gripping device 6 itself and then to the gripping group 2.

Other embodiments of the method and of the detection system according to the invention can provide that the processing unit 17 controls the advancement of the mechanical gripping device 6 along the central axis 8 for an operating distance to which it contributes, instead of the entire thickness 21 (also referred to as $t_{tool}$), of the at least one tool 3 along the central axis 8, a portion (possibly even zero) of this thickness 21 ($t_{tool}$) depending on the gripping profile of the grippers 7 of the mechanical gripping device 6.

A subsequent step of the method comprises recalling the gripping group 2 along the central axis 8 and, consequently, also the mechanical gripping device 6, towards the rest position 18.

Then follows a release phase of the at least one tool 3 taken according to methods known in the field, which will therefore not be described further.

To pick up additional tools 3 positioned overhanging along the support shaft 4, it is possible to proceed in the same way as previously described.

The positioning method according to the invention optionally comprises the step of acquiring the gripping distance 22, along the central axis 8, of a tool 3 to determine the position of the frontal plane 20 of a further tool 3 to be picked up after the tool. 3 previously picked up along the same support shaft 4, so as to bring the gripping plane 14 to the gripping distance 22 to pick up this additional tool 3.

In fact, it is observed that the position of a further tool 3 to be picked up following a tool 3 just picked up along the same support shaft 4 can be derived from the gripping distance 22 of the at least one previously picked tool 3 and from the thickness of the latter. However, the detection system 1 allows to check the actual position of the gripping group 2 with respect to the further tool 3 to ensure a correct grip of the same.

With respect to the solutions of the prior art, it is evident that the detection system 1 according to the invention and the relative method are able to ensure correct and precise positioning of the gripping group 2 with respect to the at least one tool 3 to be picked up, even when not the position of the latter along the support shaft 4 is known a priori.

Furthermore, the detection system 1 comprises a detection unit which, in turn, comprises at least one photoelectric sensor 9 configured to perform a measurement along a radial direction 10 with a direction from the central axis 8 away from the latter, contrary to the known types of solutions which, on the other hand, provide for carrying out a measurement along at least one radial direction which extends from the outside of the tool 3 to be picked up, towards a central axis for moving the gripping group.

The detection system 1 therefore allows to perform a precise detection of the position of at least one tool 3 to be picked up independently of the radial dimension of the at least one tool 3 itself since, generally, the tools 3 each have a central through opening of the same size, regardless of their outer diameter.

Furthermore, the internal surface of the through opening of each tool 3, relative to which the measurement is performed, is free of impurities or residues which can instead be collected along the external surface of each tool 3 (such as oily residues) during the use of the tool or is free from non-reflective portions, to the advantage of a high measurement accuracy by the at least one photoelectric sensor 9.

With reference to the tools 3 used in slitter-type cutting lines, it should be noted that any tools bearing a rubberized outer surface, spacer elements and cutting blades each have an internal metal portion delimiting a through opening of the same size and capable of reflect the signal emitted by the at least one photoelectric sensor 9.

Furthermore, the detection system 1 according to the invention provides for the positioning of the detection unit in correspondence with the front portion 5 of the gripping group 2, thus being able to exploit the moving members of the gripping group 2 itself to move the detection, as part of a simple and easy to implement solution.

The detection unit can be connected directly to the mechanical gripping device 6 of a gripping group 2 allowing to implement the detection system 1 according to the invention even in a pre-existing gripping group, requiring limited modifications to it.

In the light of the above, it is quite evident that the detection system 1 and the respective positioning method according to the present invention overcome the drawbacks set out in the introduction.

In the foregoing, the preferred embodiments have been described and variants of the present invention have been suggested, but it is to be understood that those skilled in the art will be able to make modifications and changes without thereby departing from the relative scope of protection, as defined by claims attached.

**Claims**

1. Detection system (1) configured to be operationally connectable to a front portion (5) of a gripping group (2) for gripping at least one tool (3) supported in cantilever way along a support shaft (4), wherein said detection system (1) comprises a detection unit comprising, in turn, at least one photoelectric sensor (9) configured for emitting an optical signal along a radial direction (10) orthogonal to a central axis (8) for the movement of said gripping group (2), for detecting the presence of said at least one tool (3), wherein said optical signal is oriented with a direction starting from said central axis (8) moving away from it, **characterised in that** said detection system (1) further comprises at least one plate-like support (12) to which said at least one photoelectric sensor (9) is operatively connected so as to define an optical plane (13) along which the optical signal emitted by said at least one sensor photoelectric (9) lies.

2. Detection system (1) according to claim 1, comprising a control and processing unit (17) operatively connected to said at least one photoelectric sensor (9), wherein said control and processing unit (17) is configured to control and command the activation of organs for moving said gripping group (2) along said central axis (8) between one initial rest position (18) and a working position in proximity of said at least one tool (3).

3. Detection system (1) according to claim 1, wherein said unit of detection comprises a closure cover (16) operationally connectable to said plate-like support (12), in a spaced-apart position, delimiting a laterally open interspace inside which said at least one photoelectric sensor (9) is positioned.

4. Detection system (1) according to claim 1 or 3, wherein said optical plane (13) is spaced from a gripping plane (14) of a mechanical gripping device (6) of said gripping group (2) along said central axis (8), through an off-set distance (15).

5. Detection system (1) according to any one of the preceding claims, wherein said detection unit comprises at least three sensors photoelectric (9) arranged equidistant from each other according to a symmetry circumferentially around said central axis (8).

6. Method of positioning a gripping group (2) for gripping at least one tool (3) supported in a warehouse along a support shaft (4) in a cantilevered way, wherein said method is implemented through a detection system (1) according to any one of claims 1 to 5, said method comprising the steps of:

   - position said gripping group (2) in a frontal position with respect to said one at least one tool (3) to be picked up, centred with respect to said at least one tool (3), with said detection unit of said detection system (1) facing towards said at least one tool (3) and centred thereon;
   - moving said detection unit along said central axis (8) together with said gripping group (2), approaching said at least one tool (3);
   - activating said at least one photoelectric sensor (9) of said unit detection to detect the positioning of a frontal plane (20) of said at least one tool (3) along said central axis (8);
   - position a mechanical gripping device (6) of said gripping group (2) at a gripping distance (22) of said at least one tool (3), to allow the picking of said at least one tool (3).

7. Positioning method for positioning a gripping group (2) according to claim 6, wherein said method is implemented through the system detection (1) according to claim 1 or according to any one of the claims from 2 to 5, depending on claim 2, also comprising the following step:

   - transmitting a detection signal of said frontal plane (20) of said at least one tool (3) from said at least one photoelectric sensor (9) to a unit of control and processing (17) operatively connected to organs for moving said gripping group (2).

8. Positioning method for positioning a gripping group (2) according to claim 6 or 7, wherein said step of detecting the positioning of said at least one tool (3) along said central axis (8) comprises emitting at least one optical signal from said at least one photoelectric sensor (9) along one radial direction (10) with respect to said central axis (8) with direction starting from said central axis (8) moving away from it.

9. Positioning method for positioning a gripping group (2) according to any one of the claims 6 to 8, wherein said step of positioning said mechanical gripping device (6) in correspondence with a gripping distance (22) for said at least one tool (3) to be removed comprises advancing said mechanical gripping device (6) by a distance along said central axis (8) equal to the sum of a thickness (21) of said at least one tool (3) and an off-set distance (15) between said optical plane (13) and a gripping plane (14) of said mechanical device gripping (6).

**10.** Positioning method for positioning a gripping group (2) according to any one of claims 6 to 9, comprising acquiring said gripping distance (22) of said at least one tool (3) to determine the position of a frontal plane (20) of an additional tool (3) to be removed following said tool (3) previously taken along the same support shaft (4).

**Patentansprüche**

**1.** Erfassungssystem (1), das so konfiguriert ist, dass es mit einem vorderen Abschnitt (5) einer Greifgruppe (2) zum Greifen mindestens eines Werkzeugs (3), das freitragend entlang einer Tragwelle (4) getragen wird, wirkverbunden werden kann,

wobei das Erfassungssystem (1) eine Erfassungseinheit umfasst, die wiederum mindestens einen photoelektrischen Sensor (9) umfasst, der so konfiguriert ist, dass er ein optisches Signal entlang einer radialen Richtung (10) orthogonal zu einer Mittelachse (8) für die Bewegung der Greifgruppe (2) emittiert, um das Vorhandensein des mindestens einen Werkzeugs (3) zu erfassen,
wobei das optische Signal in einer Richtung ausgerichtet ist, die von der Mittelachse (8) ausgeht und sich von dieser weg bewegt, **dadurch gekennzeichnet, dass** das Erfassungssystem (1) ferner mindestens einen plattenartigen Träger (12) umfasst, mit dem der mindestens eine photoelektrische Sensor (9) wirkverbunden ist, um eine optische Ebene (13) zu definieren, entlang der das von dem mindestens einen photoelektrischen Sensor (9) emittierte optische Signal liegt.

**2.** Erfassungssystem (1) nach Anspruch 1, umfassend eine Steuer- und Verarbeitungseinheit (17), die mit dem mindestens einen photoelektrischen Sensor (9) wirkverbunden ist, wobei die Steuer- und Verarbeitungseinheit (17) so konfiguriert ist, dass sie die Aktivierung von Organen zum Bewegen der Greifgruppe (2) entlang der Mittelachse (8) zwischen einer anfänglichen Ruheposition (18) und einer Arbeitsposition in der Nähe des mindestens einen Werkzeugs (3) steuert und befiehlt.

**3.** Erfassungssystem (1) nach Anspruch 1, wobei die Erfassungseinheit eine Verschlussabdeckung (16) umfasst, die mit dem plattenartigen Träger (12) in einer beabstandeten Position wirkverbunden werden kann und einen seitlich offenen Zwischenraum begrenzt, in dem der mindestens eine photoelektrische Sensor (9) positioniert ist.

**4.** Erfassungssystem (1) nach Anspruch 1 oder 3, wobei die optische Ebene (13) von einer Greifebene (14) einer mechanischen Greifvorrichtung (6) der Greifgruppe (2) entlang der Mittelachse (8) um einen Versatzabstand (15) beabstandet ist.

**5.** Erfassungssystem (1) nach einem der vorhergehenden Ansprüche, wobei die Erfassungseinheit mindestens drei photoelektrische Sensoren (9) umfasst, die äquidistant voneinander gemäß einer Symmetrie in Umfangsrichtung um die Mittelachse (8) angeordnet sind.

**6.** Verfahren zum Positionieren einer Greifgruppe (2) zum Greifen mindestens eines Werkzeugs (3), das in einem Lager entlang einer Tragwelle (4) freitragend getragen wird, wobei das Verfahren durch ein Erfassungssystem (1) nach einem der Ansprüche 1 bis 5 implementiert wird, wobei das Verfahren die folgenden Schritte umfasst:

- Positionieren der Greifgruppe (2) in einer frontalen Position in Bezug auf das mindestens eine aufzunehmende Werkzeug (3), zentriert in Bezug auf das mindestens eine Werkzeug (3), wobei die Erfassungseinheit des Erfassungssystems (1) dem mindestens einen Werkzeug (3) zugewandt und darauf zentriert ist;
- Bewegen der Erfassungseinheit entlang der Mittelachse (8) zusammen mit der Greifgruppe (2), wobei sie sich dem mindestens einen Werkzeug (3) nähern;
- Aktivieren des mindestens einen photoelektrischen Sensors (9) der Erfassungseinheit, um die Positionierung einer Frontalebene (20) des mindestens einen Werkzeugs (3) entlang der Mittelachse (8) zu erfassen;
- Positionieren einer mechanischen Greifvorrichtung (6) der Greifgruppe (2) in einem Greifabstand (22) von dem mindestens einen Werkzeug (3), um das Aufnehmen des mindestens einen Werkzeugs (3) zu ermöglichen.

**7.** Positionierungsverfahren zum Positionieren einer Greifgruppe (2) nach Anspruch 6, wobei das Verfahren durch das Erfassungssystem (1) nach Anspruch 1 oder nach einem der Ansprüche 2 bis 5 implementiert wird, abhängig von Anspruch 2, ferner umfassend den folgenden Schritt:

- Übertragen eines Erfassungssignals der Frontalebene (20) des mindestens einen Werkzeugs (3) von dem mindestens einen photoelektrischen Sensor (9) an eine Steuer- und Verarbeitungseinheit (17), die mit Organen zum Bewegen der Greifgruppe (2) wirkverbunden ist.

**8.** Positionierungsverfahren zum Positionieren einer Greifgruppe (2) nach Anspruch 6 oder 7, wobei der Schritt des Erfassens der Positionierung des mindestens einen Werkzeugs (3) entlang der Mittelachse (8) das Emittieren mindestens eines optischen Signals von dem mindestens einen photoelektrischen Sensor (9) entlang einer radialen Richtung (10) in Bezug auf die Mittelachse (8) umfasst, wobei die Richtung von der Mittelachse (8) ausgeht und sich von dieser weg bewegt.

9. Positionierungsverfahren zum Positionieren einer Greifgruppe (2) nach einem der Ansprüche 6 bis 8, wobei der Schritt des Positionierens der mechanischen Greifvorrichtung (6) in Übereinstimmung mit einem Greifabstand (22) für das mindestens eine zu entfernende Werkzeug (3) das Vorschieben der mechanischen Greifvorrichtung (6) um einen Abstand entlang der Mittelachse (8) umfasst, der gleich der Summe einer Dicke (21) des mindestens einen Werkzeugs (3) und eines Versatzabstands (15) zwischen der optischen Ebene (13) und einer Greifebene (14) der mechanischen Greifvorrichtung (6) ist.

10. Positionierungsverfahren zum Positionieren einer Greifgruppe (2) nach einem der Ansprüche 6 bis 9, umfassend das Erfassen des Greifabstands (22) des mindestens einen Werkzeugs (3), um die Position einer Frontalebene (20) eines zusätzlichen zu entfernenden Werkzeugs (3) zu bestimmen, das dem Werkzeug (3) folgt, das zuvor entlang derselben Tragwelle (4) aufgenommen wurde.


**Revendications**

1. Système de détection (1) configuré pour être fonctionnellement connectable à une partie avant (5) d'un groupe de préhension (2) afin de saisir au moins un outil (3) supporté en porte-à-faux le long d'un arbre de support (4), où ledit système de détection (1) comprend une unité de détection comprenant, à son tour, au moins un capteur photoélectrique (9) configuré pour émettre un signal optique le long d'une direction radiale (10) orthogonale par rapport à un axe central (8) pour le mouvement dudit groupe de préhension (2), pour détecter la présence dudit au moins un outil (3), système de détection dans lequel ledit signal optique est orienté en ayant une direction partant dudit axe central (8), tout en s'éloignant de celui-ci, **caractérisé en ce que** ledit système de détection (1) comprend en outre au moins un support en forme de plaque (12), support auquel ledit au moins un capteur photoélectrique (9) est fonctionnellement connecté, de façon à définir un plan optique (13) le long duquel se trouve le signal optique émis par ledit au moins un capteur photoélectrique (9).

2. Système de détection (1) selon la revendication 1, comprenant une unité de contrôle et de traitement (17) fonctionnellement connectée audit au moins un capteur photoélectrique (9), système de détection dans lequel ladite unité de contrôle et de traitement (17) est configurée pour contrôler et commander l'activation d'organes servant à déplacer ledit groupe de préhension (2) le long dudit axe central (8), entre une position initiale de repos (18) et une position de travail se trouvant à proximité dudit au moins un outil (3).

3. Système de détection (1) selon la revendication 1, dans lequel ladite unité de détection comprend un couvercle de fermeture (16) fonctionnellement connectable audit support en forme de plaque (12), couvercle qui, dans une position espacée, délimite un espace intermédiaire ouvert latéralement, à l'intérieur duquel est positionné ledit au moins un capteur photoélectrique (9).

4. Système de détection (1) selon la revendication 1 ou 3, dans lequel ledit plan optique (13) est espacé, par une distance de décalage (15), d'un plan de préhension (14) d'un dispositif de préhension mécanique (6) dudit groupe de préhension (2) le long dudit axe central (8).

5. Système de détection (1) selon l'une quelconque des revendications précédentes, dans lequel ladite unité de détection comprend au moins trois capteurs photoélectriques (9) agencés de façon équidistante les uns par rapport aux autres conformément à une symétrie formée circonférentiellement autour dudit axe central (8).

6. Procédé de positionnement d'un groupe de préhension (2) afin de saisir, dans un entrepôt, au moins un outil (3) supporté en porte-à-faux le long d'un arbre de support (4), où ledit procédé est mis en oeuvre par un système de détection (1) selon l'une quelconque des revendications 1 à 5, ledit procédé comprenant les étapes :

- de positionnement dudit groupe de préhension (2) dans une position frontale par rapport audit au moins un outil (3) devant être ramassé, ladite position étant centrée par rapport audit au moins un outil (3), ladite unité de détection dudit système de détection (1) étant tournée vers ledit au moins un outil (3) et centrée sur celui-ci ;
- de déplacement de ladite unité de détection le long dudit axe central (8) conjointement avec ledit groupe de préhension (2), en se rapprochant dudit au moins un outil (3) ;
- d'activation dudit au moins un capteur photoélectrique (9) de ladite unité de détection, afin de détecter le positionnement d'un plan frontal (20) dudit au moins un outil (3) le long dudit axe central (8) ;

- de positionnement, à une distance de préhension (22) dudit au moins un outil (3), d'un dispositif de préhension mécanique (6) dudit groupe de préhension (2), afin de permettre le ramassage dudit au moins un outil (3).

7. Procédé de positionnement pour positionner un groupe de préhension (2) selon la revendication 6, où ledit procédé est mis en oeuvre par le système de détection (1) selon la revendication 1 ou selon l'une quelconque des revendications 2 à 5, qui dépendent de la revendication 2, ledit procédé comprenant également l'étape suivante concernant :

- la transmission d'un signal de détection dudit plan frontal (20) dudit au moins un outil (3), ledit signal étant transmis depuis ledit au moins un capteur photoélectrique (9) jusqu'à une unité de contrôle et de traitement (17) fonctionnellement connectée à des organes servant à déplacer ledit groupe de préhension (2).

8. Procédé de positionnement pour positionner un groupe de préhension (2) selon la revendication 6 ou 7, procédé dans lequel ladite étape de détection du positionnement dudit au moins un outil (3) le long dudit axe central (8) comprend l'émission d'au moins un signal optique provenant dudit au moins un capteur photoélectrique (9) le long d'une direction radiale (10) par rapport audit axe central (8), ledit signal optique ayant une direction partant dudit axe central (8), tout en s'éloignant de celui-ci.

9. Procédé de positionnement pour positionner un groupe de préhension (2) selon l'une quelconque des revendications 6 à 8, procédé dans lequel ladite étape du positionnement dudit dispositif de préhension mécanique (6), effectuée en correspondance avec une distance de préhension (22) pour ledit au moins un outil (3) devant être retiré, comprend le fait d'avancer ledit dispositif de préhension mécanique (6) d'une distance le long dudit axe central (8), ladite distance étant égale à la somme d'une épaisseur (21) dudit au moins un outil (3) et d'une distance de décalage (15) entre ledit plan optique (13) et un plan de préhension (14) dudit dispositif de préhension mécanique (6).

10. Procédé de positionnement pour positionner un groupe de préhension (2) selon l'une quelconque des revendications 6 à 9, ledit procédé comprenant l'acquisition de ladite distance de préhension (22) dudit au moins un outil (3), afin de déterminer la position d'un plan frontal (20) d'un outil supplémentaire (3) devant être retiré, suite au fait que ledit outil (3) a été précédemment emmené le long du même arbre de support (4).

**Fig. 1**

**Fig. 2**

**Fig. 3**

**Fig. 4**

**Fig. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2193890 A
- JP 2009184081 A